# EUROPEAN PATENT APPLICATION

(11) **EP 4 848 142 A1**
(43) Date of publication of application: **02.12.2026**
(21) Application number: 25300068.1
(22) Date of filing: 28.05.2025
(51) Int. Cl.: G06N 3/042, G06N 3/082, G06N 3/09

(54) **METHOD AND DEVICE FOR SYSTEM IDENTIFICATION FACILITATED BY A KOLMOGOROV-ARNOLD NETWORK**

(71) Applicant: ABB SCHWEIZ AG, 5400 Baden (CH)
(72) Inventor: PAPAFOTIOU, George, 5591EJ Heeze (NL); GASHI, Nart, 5611SJ Noord-Brabant (NL); KAKOSIMOS, Panagiotis, 723 58 Västerås (SE)
(74) Representative: Kransell & Wennborg KB

(57) **Abstract**

A system identification method for estimating an interpretable model (M) of a technical system (110), comprising: forming a training dataset including observations of input data and corresponding output data of the technical system while it is in ordinary operation; and using a Kolmogorov-Arnold network (KAN) to estimate a model of the technical system based on the training dataset. The method further comprises determining whether the training dataset sufficiently captures the technical system's dynamic characteristics or determining whether the model of the technical system sufficiently captures the technical system's dynamic characteristics; and, if said dynamic characteristics are not sufficiently captured, augmenting the training dataset with further observations of input data and corresponding output data of the technical system.

## Description

### TECHNICAL FIELD

The present disclosure relates to the field of system identification and in particular to methods and devices configured to estimate an interpretable model of a technical system by training a Kolmogorov-Arnold network.

### BACKGROUND

System identification is a branch of control theory which builds mathematical models of dynamical systems by statistical processing of observations of the systems. Neural networks, and notably multilayer perceptrons (MLPs), have been utilized in system identification for a long time. See for example A. Parlos et al., "Recurrent multilayer perceptron for nonlinear system identification", IJCNN-91, Seattle International Joint Conference on Neural Networks, 1991, pp. 537-540, doi: 10.1109/IJCNN.1991.155391, which reports on successful use of a hybrid feedforward/feedback neural network, a recurrent MLP, for identifying nonlinear dynamic systems in an input/output sense. The output of an MLP-based system identification is the trained MLP itself. While this neural network yields accurate numerical predictions of the system behavior - and may be sufficient for a wide range of applications - it does not allow the user to inspect any state equations of the system and understand the system's structure.

A main interest of the present disclosure are *interpretable* system models. An interpretable (or mechanistically interpretable, or explainable) neural network does not have only a black-box character, but it consists of - or there is a procedure for converting it into - human-understandable components or circuits, which reveal some of the causal pathways by which the neural network processes information. Correspondingly, an interpretable system model may be in the form of state equations or a dynamic system model on analytic form, i.e., a small number of elementary mathematical functions, preferably expressed as symbolic formulas. A trained neural network or a black-box model is not interpretable in this sense. In the research paper Z. Liu et al., "KAN: Kolmogorov-Arnold networks", arXiv preprint, 2024, doi: 10.48550/arXiv.2404.19756, KANs are introduced as a promising tool for developing interpretable system models based on observed data. The building blocks of a KAN are learnable activation functions, which correspond to elementary mathematical functions, which can be expressed as symbolic formulas.

For good or ill, neural networks are known to provide plausible-looking outputs in a very broad range of circumstances. The scarcity of indicators of the extent to which a neural network has managed to solve a task given to it is a criticism frequently voiced in the user community. In system identification specifically, significant prior knowledge about the modeled system is required to verify that a model of it is correct. Absent such prior knowledge, onerous and time-consuming experimental testing is oftentimes required in order to verify a fresh model of a technical system. It would be desirable to integrate relevant safeguards into the system identification process itself, so that the verification becomes superfluous.

### SUMMARY

One objective of the present disclosure is to embed KAN into an adaptive system identification method with an ability to safeguard the reliability of the estimated system model. Reliability may refer to the comprehensiveness or completeness of the system model. A further objective is to provide usable tests for determining whether the system model is reliable and, if it is not, take appropriate action. A further objective is to propose a system identification device with these characteristics.

At least some of the above objectives are achieved by the invention as defined by the independent claims. The dependent claims relate to advantageous embodiments of the invention.

In a first aspect, there is provided a system identification method for estimating an interpretable model M of a technical system. The basic execution flow of the method is: forming a training dataset including observations of input data and corresponding output data of the technical system while it is in ordinary operation; and using a Kolmogorov-Arnold network (KAN) to estimate a model of the technical system based on the training dataset. Additionally, it is either determined whether the training dataset sufficiently captures the technical system's dynamic characteristics or whether the model of the technical system sufficiently captures the technical system's dynamic characteristics. If it is determined that said dynamic characteristics are not sufficiently captured, the training dataset is augmented with (extended with) further observations of input data and corresponding output data of the technical system.

In other words, the novel system identification method contains safeguards of the reliability of the KAN-estimated model, either in the form of an a priori test that targets the training data set prior to the model estimation, or in the form of an a posteriori test performed on the estimated model. If it is found that the dynamic characteristics of the system are not sufficiently captured, suitable action is taken by augmenting the training dataset with further observations of input data and corresponding output data of the technical system (i.e., said further observations are added to the training dataset). The training dataset after augmentation is expected to provide sufficient excitation to identify the technical system's dynamic characteristics.

Indeed, it has been observed in experiments on KANs that the training data must contain the necessary information for the KAN to discover the model. If there are no transients, the KAN will only discover the steady-state part of the system equations, but generally no differential equations with respect to time. Additionally, the sampling period must be sufficient for the system equations to be discovered. This is possible if the system exhibits representative examples of its dynamic behaviors in the sampling period, including behaviors triggered by natural disturbances or transients in the system. It is generally fruitful to perform sampling
- in startup and shutdown phases: The system often exhibits dynamic behavior during these phases, such as speed ramps, torque changes, or oscillations;
- in connection with operating-point changes: Dynamic responses can be caused by variations in load (e.g., due to environmental or operational factors) and variations in setpoint or reference quantities.

In some embodiments, the further observations of input data and corresponding output data of the technical system can be provided while artificially exciting the technical system under various specific conditions. In other embodiments, where the observations are acquired by digital sampling, the further observations relate to the technical system in ordinary operation, but they are performed at an increased sampling rate, such that more fine-grained time variations can be digitally captured.

In further embodiments of the method, a first-principle base model of the technical system is used as input to the KAN-based analysis, such that the KAN refines the base model on the basis of the training dataset. In particular, supposing the base model includes one or more configurable parameters, the KAN may be applied to fit the configurable parameters to the training dataset.

In a second aspect of the present disclosure, there is provided a system identification device configured to estimate an interpretable model of a technical system. The system identification device comprises: an input interface configured to accept observations of input data and corresponding output data of the technical system; a memory storing a KAN; and processing circuitry configured to perform the method according to the first aspect outlined above.

The system identification device according to the second aspect generally effects and advantages of the method according to the first aspect outlined above, and it can be implemented with a corresponding degree of technical variation.

The present disclosure further relates to a computer program containing instructions for causing a computer, or the system identification device in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 is a block diagram of a technical system (vehicle powertrain) under the control of a control system, and a system identification device configured to collect observations of input data and corresponding output data of the technical system;
figure 2 is a flowchart of a system identification method according to embodiments herein;
figure 3 shows a model of a KAN;
figure 4A shows a structure corresponding to an initialized KAN, and figure 4B illustrates the same KAN after a first training round;
figure 5 shows an example training dataset that has been collected for an induction motor that drives an axial fan; and
figures 6A and 6B are comparative plots illustrating speed dynamics of the induction motor, wherein the first curve represents angular speed predicted by the KAN-learned equation, and the second curve represents the same quantity predicted under identical conditions by a computer simulation tool configured with ground-truth state equations of the induction motor.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

### System overview

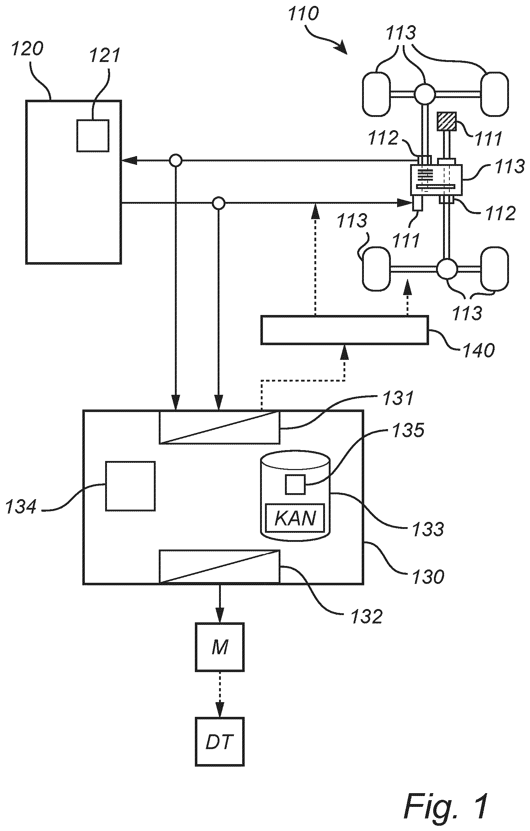

Figure 1 shows a technical system 110 in the form of a powertrain for a vehicle, which comprises actuators 111, sensors 112 and structural elements 113. In a powertrain, the actuators 111 may include motors and brakes, the sensors 112 may be in the form of rpm sensor, encoder, strain sensor, and the structural elements on which the actuators 111 operate may include gears, axles, shafts and wheels. A control system 120 is arranged to receive sensor signals from the sensors 112, to generate control signals, and to apply the control signals to the actuators 111. The basis of the control signals may be the sensor signals, a control program and/or setpoint values configured by an operator. The control system 120 may implement feedback loops (e.g., a P, PI, PD or PID controller), an emergency functionality, a servo, a transient suppression functionality 121, or the like.

Figure 1 further shows a system identification device 130, which is colocated with the technical system 110 and control system 120, or located remotely. The system identification device 130 comprises a signal interface 131, an operator interface 132, a memory 133 and processing circuitry 134. The memory 133 is shown storing a computer program 135 executable by the processing circuitry 134, as well as a data structure KAN representing a Kolmogorov-Arnold network (KAN). The computer program 135 may be one that causes the processing circuitry 134 to perform the system identification method 200 to be described in the next subsection.

The signal interface 131 is arranged to receive copies of the control signals and sensor signals that the control system 120 exchanges with the actuators 111 and sensors 112 of the technical system 110. The signal interface 131 can further be associated with a signal injector 140, which is operable to inject signal content (e.g., analog waveforms, pulses, positive or negative offsets) into the control signal path towards the technical system 110, or directly into the technical system 110, or both of these options.

The operator interface 132 is configured for displaying a system model estimated by the KAN or outputting it in machine readable form for further uses. Moreover, the operator interface 132 may accept configuration data and settings from an operator of the system identification device. It is appreciated that the operator interface 132 is not necessarily adapted for a human operator; in different embodiments, the operator interface 132 may be a human-machine interface, or it may be implemented as an interface for exchanging queries (e.g., commands) and responses (e.g., interpretable model of the technical system 110) with an executing software process or with a networked processing device.

### System identification method

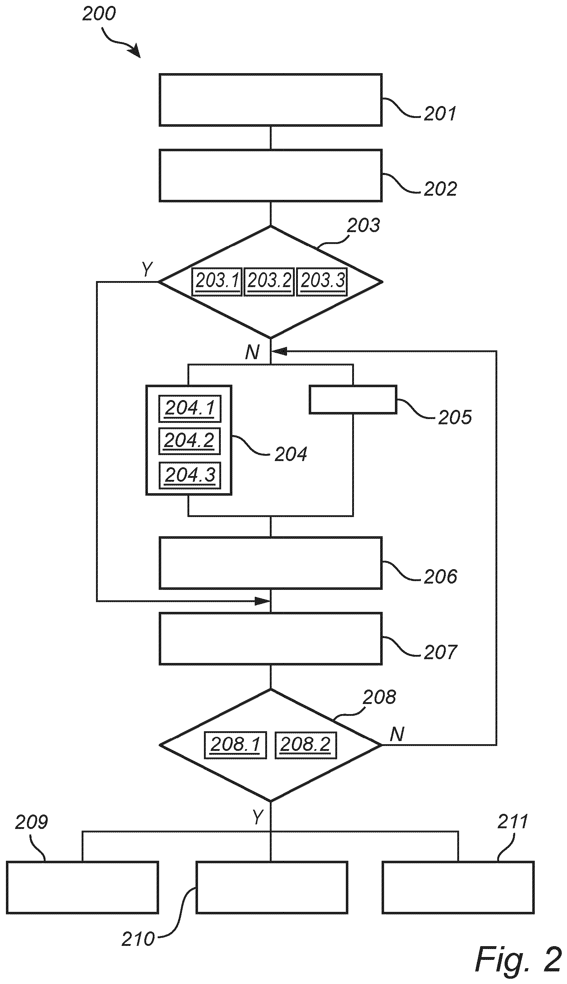

The flowchart in figure 2 contains steps of a system identification method 200. The method 200 may be executed by a general-purpose computer or specifically by the system identification device 130 depicted in figure 1.

It is emphasized that not all embodiments of the method 200 include the full number of steps shown in figure 2. For example, a basic embodiment of the method 200 includes steps 202 and 207, either step 203 or 206, and step 206 in the case of a negative outcome of the step 203 or 208. It is furthermore noted that the steps of an embodiment are not necessarily performed in a consecutive fashion. Rather, the execution of two steps may overlap in time (e.g., the acquisition of observations within step 201 may continue alongside step 203, where the completeness of the training dataset is tested), and the order of some steps may be varied unless determined in advance by the nature of the input and output data.

In a first step 201 of the system identification method 200, observations of input data and corresponding output data of the technical system 110 are acquired while the technical system 110 is in ordinary operation. The observations may be acquired by digitally sampling signals on the paths between the technical system 110 and control system 120 using a first sampling frequency, which is considered an adequate tradeoff between the requirements for numerical accuracy and processing/storage requirements. In some use cases, it is advantageous to acquire the observations by means of locally deployed devices that report their collected data using Internet-of-things (IoT) connectivity.

Timestamps may be added to the sampled data to be able to align the corresponding input and output data in time in later processing steps. Ordinary operation refers to a condition of the technical system 110 where the entity executing step 201 (e.g., a system identification device 130) does not perturb the technical system 110 and does not perturb any control system 120 associated therewith. In ordinary operation, the technical system 110 may perform a technical or industrial utility task for which it is configured. In ordinary operation, further, the technical system 110 may run with nominal parameter settings and/or a standard configuration. Step 201 may be performed by the same entity as the other steps the method 200, or by a different entity, such as the IoT-enabled local devices mentioned just above.

In a next step 202, a training dataset is formed from the acquired observations. Timestamps or equivalent metadata may be relied upon to establish temporal correspondences between input and output data.

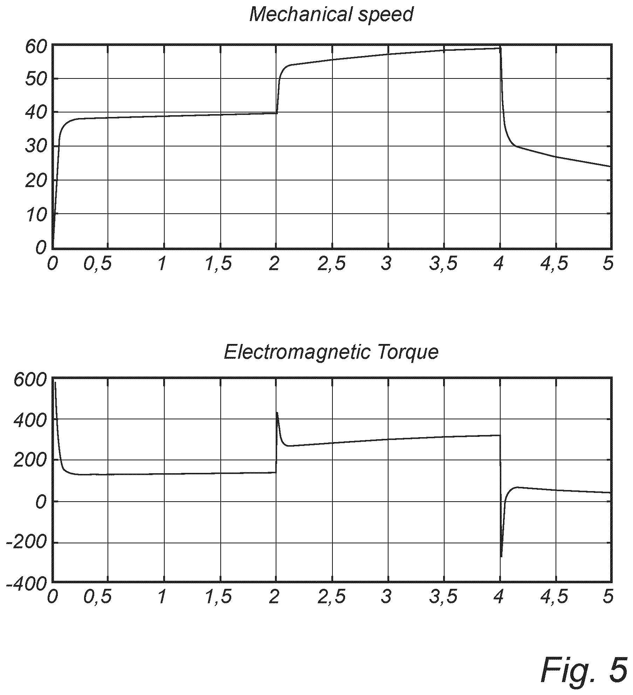

Figure 5 shows an example training dataset that has been collected for an induction motor that drives an axial fan. The upper sub-plot refers to mechanical speed *ωₙ* (output data; unit: 1 rad/s) as a function of time in second, and the lower sub-plot refers to signed electromagnetic torque *Tₑ* (input data; unit: 1 Nm). It is noted that the input data in this example is not necessarily a control signal; rather the control signal to an induction motor would be an electric quantity. The input and output data are corresponding in the sense that events occurring at equal time values in the two subplots are also simultaneous in physical time. The example training dataset that was collected at a sampling speed of 200 Hz.

In a step 203 (a priori test), it is determined whether the formed training dataset sufficiently captures the technical system's 110 dynamic characteristics. In alternative terminology, dynamic characteristics can be described as time-dependent characteristics of the technical system 110, or transient characteristics, or nonequilibrium characteristics. Three example ways of determining this are:
- by detecting a variation over time of the observations (substep 203.1). This may mean directly inspecting whether the signals change over time, e.g., by computing a standard deviation of numerical time derivatives of individual signals.
- by detecting a variation over time of a relation between a control signal in the input data and a corresponding sensor signal in the output data (203.2). A "relation" in this sense may for example be a difference, an absolute difference, or a ratio. A positive detection result suggests that the training dataset captures a dynamic behavior of the technical system 110 which is at least partially independent from the actions by the control system 120.
- by detecting a time correlation between the input data and the output data (203.3). In particular, a time correlation (statistical cross-correlation with respect to time) between a control signal and a sensor signal may be detected. A positive detection result for this option suggests that the training dataset captures the control dynamics of the technical system 110, i.e., how soon and how much the technical system 110 response to a control action applied by the control system 120.
Thresholds for judging whether the training dataset shall be considered to sufficiently capture the time dynamics are to be defined in each implementation. For example, the thresholds may be set so as to strike a balance between a desired degree of comprehensiveness of the final system model M and an acceptable rate of 'false negatives' in step 203. A false negative in this sense is a finding that the training dataset is insufficient to capture the technical system's 110 dynamic characteristics, which triggers a not-needed augmentation of the training dataset (see step 206 below). For substeps 203.1 and 203.2, a dimensionless threshold of, say, 0.1, 0.2, 0.3 or 0.4 may be used if the derivative is normalized with an average of an absolute value of the signal concerned, into a variation coefficient. The relation may be normalized similarly to allow the use of a dimensionless threshold. For substep 203.3, the cross-correlation may be normalized into a correlation coefficient, and a threshold may be applied of, say, 0.1, 0.2, 0.3, 0.4, 0.5 or higher.

As explained above, step 203 is optional in the system identification method 200 in the sense that it may be replaced with step 208. Embodiments of the method 200 may include both steps 203 and 208.

In the case of a negative detection result in step 203, the execution flow continues (N branch) to one or more compensatory actions aiming to improve the training dataset. The improvements serve to enable extending the training dataset with further observations (augmentation, step 206), so that it portrays the technical system 110 more comprehensively. The further observations either relate to different events/behaviors than those acquired in step 201, or the further observations relate to similar events/behaviors though acquired in a different way.

Within the first category (new events/behaviors), it is possible to perform a step 204 of acquiring said further observations, with which the training dataset is to be augmented, while artificially exciting the technical system 110. In most use cases, the exact behavior that the artificial excitation causes is not of crucial importance, but the aimed-for effect is rather to trigger *some* time evolution of the technical system 110 which provides sufficient basis for the system identification (here: KAN) to recognize such quantities as a real or complex gain, a time constant (of exponential decay), an oscillation frequency, eigenvalues, exceptional behaviors, etc.

One option is to directly inject a signal into the technical system 110 (substep 204.1). The technical system 110 may be equipped with dedicated interfaces for injecting signal content, e.g., analog waveforms, pulses, positive or negative offsets. In the case of digital signals, signal injection oftentimes includes replacing signal content with an external digital signal. Injecting signal content may correspond to superimposing the signal content. The target of the signal injection may be control signals or internal variables of the technical system 110.

Another option is to alter settings of the control system 120 (substep 204.1). In particular, a setpoint, a control gain or the characteristics of a control loop may be temporarily altered. This may have the effect that the control system 120 abruptly becomes aware of a significant discrepancy between setpoint and actual values, which leads it to modify a control signal quasi-discontinuously, such that a nonequilibrium behavior of the technical system 110 is exposed. Care should be taken that the alteration of the control system setting is not so large that it provokes artefacts, such as resonances, self-amplification, underdamped oscillation in a feedback loop, etc. This may be verified experimentally, e.g., by gradually increasing the magnitude of the alteration in controlled conditions while monitoring for qualitatively new behaviors.

As a further development of this, it is furthermore possible to temporarily suspend any transient-suppression functionality 121 with which the control system 120 is equipped (substep 204.2). The transient-suppression functionality 121 may be configured to detect early signs of transients and take compensatory action aiming to eliminate or attenuate the transients; architecturally, the transient-suppression functionality 121 may be a component with authority to temporarily override the control system 120. However, the transient-suppression functionality 121 could also have the unwanted effect of hiding dynamics from the system identification process. The act of suspending the transient-suppression functionality 121 may be sufficient on its own, if transients would otherwise appear during ordinary operation of the technical system 110. Otherwise, the suspending of the transient-suppression functionality 121 may be combined with signal injection and/or alteration of a control setting, as described in substeps 204.1 and 204.3.

Within the second category (similar events/behaviors acquired differently), a step 205 acquiring said further observations, with which the training dataset is to be augmented, by resuming the digital sampling on the technical system 110 while the technical system 110 is in ordinary operation but using a second sampling frequency. The second sampling frequency is greater than the first sampling frequency used in step 201. For example, in an imagined situation where no transients in temperature are visible, this could mean either that the technical system 110 lacks such transients or that the transients have a too 'fast' time scale (too high frequency spectrum) and go unobserved because the sampling frequency is too low. If the sampling at the second sampling frequency captures qualitatively new signal content, this constitutes valuable further observations to add to the training dataset. Equivalently, the further observations could be acquired at an unchanged sampling frequency but while applying measures to slow down the system response in physical time. The measures for slowing down the system response may be different for different classes of technical systems; in the case of drive electronics and other power electronics, for example, such measures could include increasing or decreasing the switching frequency.

Although the flowchart in figure 2 shows an embodiment where steps 204 and 205 are mutually exclusive, it is understood that the method 200 may comprise combining the act of artificially exciting the technical system 110 with a change to an increased sampling frequency.

In a step 206, the training dataset is augmented with the further observations of input data and corresponding output data of the technical system 110 acquired in step 204 and/or step 205.

The execution flow then proceeds to step 207, where the KAN is used to estimate a model of the technical system 110 based on the training dataset. It is understood that the output of step 207 is an interpretable model. The meaning of "interpretable" is clear to those skilled in the art, it has been explained and exemplified above, and is also discussed at length in the paper Liu (2024).

In the case of a positive detection result in step 203 (i.e., the training dataset captures the dynamic characteristics sufficiently), the model can be estimated without acquiring and adding further observations. The model estimation may follow the symbolic regression approach detailed in Liu (2024). This approach includes the steps of training the KAN structure (with sparsification), pruning the trained KAN structure, fixing elementary sub-functions, training affine parameters, and finally outputting a symbolic formula.

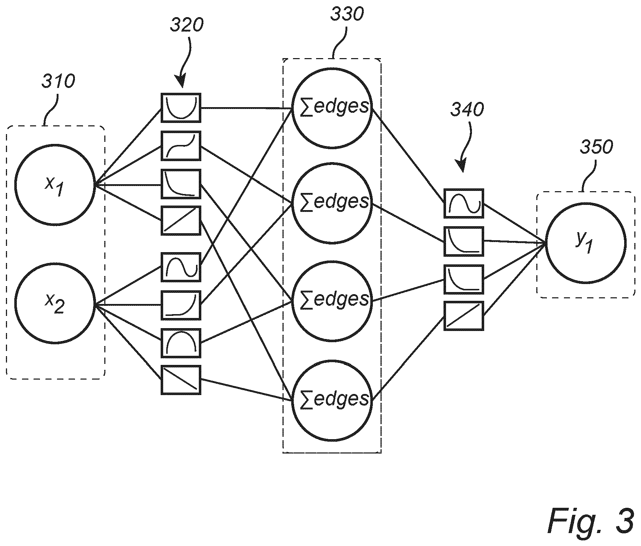

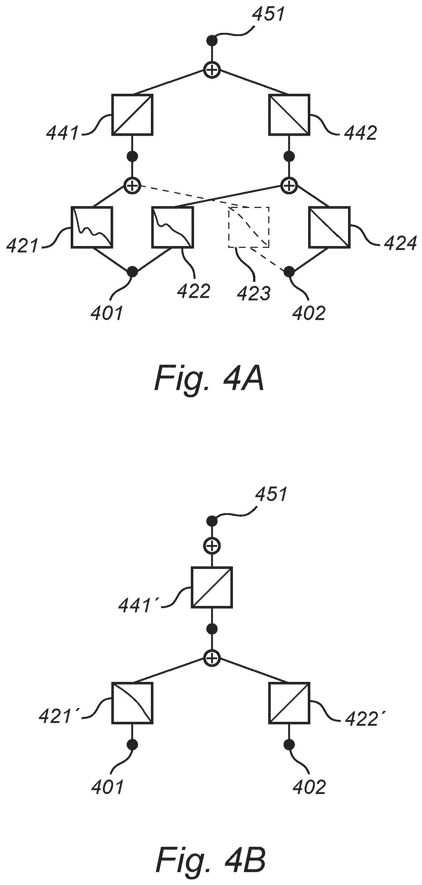

A possible model estimation process on the basis of the training dataset in figure 5 is illustrated by figures 3 and 4. It is understood that step 207 can be performed without detailed knowledge about the mathematical or technical aspects of the KAN structure.

A generic KAN structure is introduced in figure 3. It includes an input layer 310, an output layer 350 and a hidden layer 330 between these. The connecting lines 320, 340 annotated with waveforms represent learnable activation functions. The hidden layer 330 sums the inputs represented by the connecting lines. The training step may for example follow the "fit-the-derivative" approach or the "solver-in-the-loop" approach disclosed in Liu (2024).

It is recalled that the training dataset of figure 5 has been collected for an induction motor driving a fan. To find a model M that captures the dynamics of this technical system, the ansatz in figure 4A is used. Here, the input neurons 401, 402 represent mechanical speed *ωₙ* and torque *Tₑ,* respectively, and the sole output neuron 451 represents a time derivative of the mechanical speed *dωₙ*/*dt.* The numbers 421-424 and 441-442 refer to the trainable activation functions of the KAN, and the summers (represented as plus signs) correspond to the hidden layer 330 in figure 3.

Formulating an ansatz like the one in figure 4A may follow a previously known template, or it may be based on an informed guess by the operator. Less seasoned operators may tend to use a rather general ansatz, with a larger number of input and output neurons which could make the training phase last somewhat longer before it converges to a correct model M.

A further option is to use a first-principles base model of the technical system and let the KAN refine this base model. A first-principles model may also be described as a physics-informed model, or a theoretical model or a skeleton model. In the case of the fan system to which figure 5 relates, some first principles (laws of physics) could include one or more of: known electric dynamics of an induction motor, the dependence of bearing friction on angular speed, the nonlinear flow speed dependence of the viscous load from the fan that the motor experiences, dynamics of induction motor, the dynamics of a rotating mass (fan blades). Starting from an ansatz in the form of a first-principles base model is markedly different from classical parameter fitting, since if the base model fails to capture the technical system 110 correctly, the KAN will keep exploring the training set, e.g. as to whether additional relationships exist between the neurons, and it may output a model that differs qualitatively from the first-principles base model. If however the base model matches the technical system 110 reasonably, the refinement by the KAN will mainly include fitting the configurable parameters of the base model to the training data set.

Figure 4B shows the same KAN structure after a first round of training, pruning and fixing of elementary mathematic functions. More precisely, the fixed activation functions 422' and 441' are linear, and the activation function 421' is quadratic. For instance, the activation function 423, which contributed below a threshold after the training, was pruned. From the trained activations functions, which are composed at the level of the summer (+) in the hidden layer, one reads: $\frac{{dω}_{n}}{dt} = 1.548 {T}_{e} - 0.167 {ω}_{n} - 0.138 {ω}_{m}^{2} + 4.115 .$ (1)

In some embodiments of the system identification method 200, where step 203 has been performed, the execution flow could proceed to using the model M, such as by
- monitoring changes in the technical system's 110 behavior over time (step 209). This may include repeatedly assessing whether the model M predicts the behavior of the technical system 110 with good accuracy. If the accuracy starts to decline, this could signify that the technical system 110 is experiencing malfunction, such as an electric or mechanical fault, which may need to be addressed.
- improving settings of the technical system 110 or settings of an associated control system 120 (step 210). The improvement relates to the model's M prediction of the technical system's 110 performance. In other words, the settings are adjusted not by an unstructured approach, such as linear search or trial and error, but by selecting a setting which according to the model provides the desired performance.
- defining a digital twin DT of the technical system (step 211). A digital twin can be described as a digital copy of a real factory, machine, worker etc., that is created and can be independently expanded, automatically updated as well as being globally available in real time.
Regarding industrial uses of digital twins, reference is made to Brenner et al., "Digital twin as enabler for an innovative digital shopfloor management system in the ESB Logistics Learning Factory at Reutlingen University", Procedia Manufacturing, vol. 9 (2017), pp. 198 - 205. A key advantage of digital twins is their bidirectional nature, wherein the digital world can be fed into the real and the real world back into the digital, which could enable intelligent products and operational excellence.

In other embodiments, where step 203 is not performed, the reliability of the estimated system model is instead safeguarded by a step 208 (a posteriori test). In this step, it is determined whether the model M of the technical system 110 sufficiently captures the technical system's 110 dynamic characteristics.

The determination in step 208 may include directly inspecting the state equation on analytic form in the model M (substep 208.1) to see whether they have a dependence on time, or whether they contain time derivatives (i.e., whether they are differential equations with respect to time). If this is not the case despite the technical system 110 is known (e.g., based on laws of physics, simple observations) to have a dynamic behavior, it may be decided to acquire further observations of the technical system 110 (step 204, 205), augment the training dataset (step 206) and re-run the KAN-based system estimation (step 207). The output from the second execution of the KAN-based system estimation may be subjected to the same test in step 208, to determine whether it is fit for use or needs further improvements.

Alternatively or additionally, step 208 may include computing the model's M predicted response to a time-varying excitation (substep 208.2). A time-varying excitation in this sense may include an abrupt change in the value of an input variable of the model M, or by applying a predefined pulse to such an input variable. If the model M predicts that this time-varying excitation will give rise to a zero response, a constant response, or a response with very low amplitude, despite the technical system 110 is known to have a dynamic behavior, it may be decided to acquire further observations, augment the training dataset and re-run the system estimation.

### Example

To provide a ground-truth comparison with equation (1), the motor-driven fan has been simulated numerically based on first-principles equations and using the tool Simulink^{™}. More precisely, the estimated model (1) was compared with Simulink's numerical evaluation of the following theoretical model of the axial fan: $\frac{{dω}_{n}}{dt} = \frac{1}{J} \left({T}_{e}-{T}_{l}\right) - \frac{B}{J} {ω}_{n} = 1.51 {T}_{e} - 0.1499 {ω}_{n} - 0.151 {ω}_{n}^{2} ,$ (2) where *Tₑ* is the electromagnetic torque produced by the motor, *Tₗ* is the speed-dependent load applied by the fan, and the two constants *J* and *B* refer to the rotor inertia and a friction factor. For each *Tₑ,* therefore, the angular speed will converge to a steady-state value of (*Tₑ - Tₗ*)/*B* where ${T}_{l} ∝ {ω}_{n}^{2}$*.* In the rightmost equality of equation (2), the applicable numerical values of the parameters are substituted. There is good agreement with the coefficients in (1).

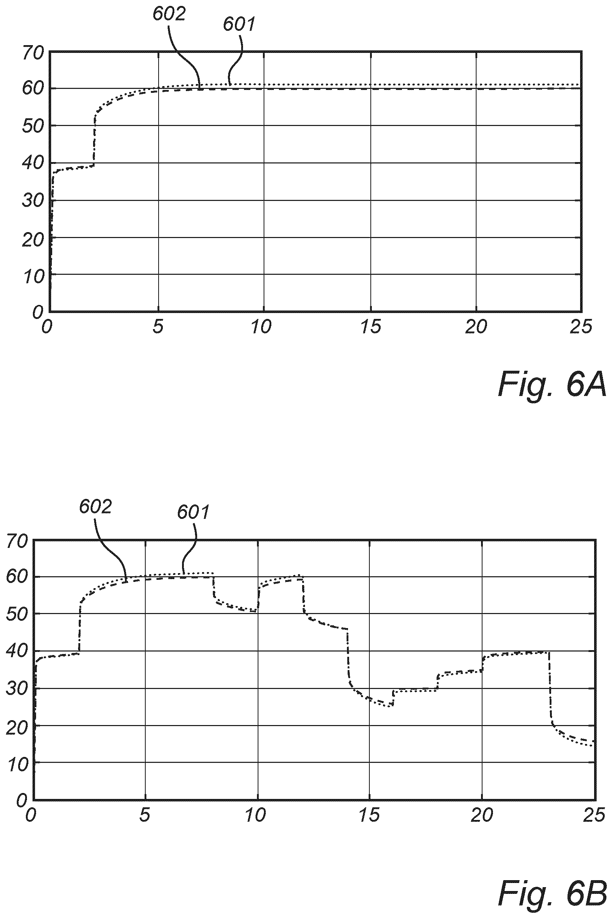

Figure 6A shows the result of this comparison for a first torque profile, where a first constant torque value is applied in the subinterval 0 ≤ *t* ≤ 2, and a second constant torque, greater than the first value, is applied for *t* ≥ 2. It is seen that the fan approaches a steady-state angular velocity for each subinterval. The curve 601 refers to the KAN-learned model and the curve 602 refers to data from Simulink. Figure 6B shows, with similar reference numbers, the result of the same comparison for a more complicated torque profile. Excellent agreement is seen in both figures.

The vehicle powertrain in figure 1 is an example of technical system. The electric drive discussed in connection with figures 4-6 is another example, to which the present teachings are applicable. The teachings may also be used for estimating models of other aspects of the considered systems, such as thermal characteristics of the electric drive in addition to the speed dynamics. More generally, a technical system may be developed for or used in any of the following industry branches: agriculture, hunting and forestry; fishing; mining and quarrying; manufacture of food products, beverages, tobacco; manufacture of textiles; manufacture of leather; manufacture of wood products; manufacture of pulp, paper, paper products, printed products; manufacture of coke, refined petroleum products, nuclear fuel; manufacture of chemicals, chemical products; manufacture of rubber and plastics; manufacture of non-metallic mineral products; manufacture of metals and metal products; manufacture of machinery; manufacture of electric and optic equipment; manufacture of transport equipment; robotics; electricity, gas and water supply; construction; wholesale and retail trade; repair of motor vehicles; transport, storage and communication; real estate and building activities; education; healthcare; domestic work.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A system identification method (200) for estimating an interpretable model (M) of a technical system (110), the method comprising:
forming (202) a training dataset including observations of input data and corresponding output data of the technical system while it is in ordinary operation; and
using a Kolmogorov-Arnold network (KAN) to estimate (207) a model of the technical system based on the training dataset,
**characterized by** determining (203) whether the training dataset sufficiently captures the technical system's dynamic characteristics or determining (208) whether the model of the technical system sufficiently captures the technical system's dynamic characteristics; and,
if said dynamic characteristics are not sufficiently captured, augmenting (206) the training dataset with further observations of input data and corresponding output data of the technical system.

2. The system identification method (200) of claim 1, wherein said determining (203) whether the training dataset sufficiently captures the technical system's dynamic characteristics comprises at least one of:
detecting (203.1) a variation over time of the observations;
detecting (203.2) a variation over time of a relation between a control signal in the input data and a corresponding sensor signal in the output data;
detecting (203.3) a time correlation between the input data and the output data.

3. The system identification method (200) of claim 1 or 2, wherein the determining (208) whether the model (M) of the technical system sufficiently captures the technical system's dynamic characteristics comprises at least one of:
inspecting (208.1) state equations on analytic form within the model;
computing (208.2) the model's predicted response to a time-varying excitation.

4. The system identification method (200) of any of the preceding claims, further comprising:
acquiring (204) said further observations of input data and corresponding output data while artificially exciting the technical system (110).

5. The system identification method (200) of claim 4, wherein:
the technical system (110) is associated with a control system (120); and
the artificial excitation of the technical system includes temporarily altering (204.1) a setpoint, a control gain or a feedback loop of the control system.

6. The system identification method (200) of claim 4 or 5, wherein:
the technical system (110) is associated with a control system (120) configured with a transient suppression functionality (121); and
the artificial excitation of the technical system includes suspending (204.2) the transient-suppression functionality.

7. The system identification method (200) of any of claims 4 to 6, wherein the artificial excitation of the technical system (110) includes injecting (204.3) a signal into the technical system.

8. The system identification method (200) of any of the preceding claims, further comprising:
acquiring (201) the observations of input data and corresponding output data of the technical system while it is in ordinary operation using a first sampling frequency; and,
acquiring (205) said further observations of input data and corresponding output data using a second sampling frequency, which is greater than the first sampling frequency.

9. The system identification method (200) of claim 8, wherein said further observations of input data and corresponding output data are acquired (205) while the technical system is in ordinary operation.

10. The system identification method (200) of any of the preceding claims, further comprising:
providing a first-principles base model of the technical system,
wherein the model (M) of the technical system is estimated (207) by having the KAN refine the base model.

11. The system identification method (200) of claim 10, wherein:
the base model includes one or more configurable parameters; and
the KAN refines the base model by fitting the configurable parameters to the training dataset.

12. The system identification method (200) of any of the preceding claims, wherein the technical system (110) includes an electric drive, and the model (M) optionally includes thermal characteristics of the electric drive.

13. The system identification method (200) of any of the preceding claims, further comprising
using the model (M) of the technical system for one of the following:
to monitor (209) changes in the technical system's behavior over time;
to improve (2100) settings of the technical system (110) or settings of an associated control system (120), wherein the improvement relates to the model's prediction of the technical system's performance;
to define (211) a digital twin (DT) of the technical system.

14. A system identification device (130) for estimating an interpretable model (M) of a technical system (110), the system identification device comprising:
an input interface (131) configured to accept observations of input data and corresponding output data of the technical system;
a memory (133) storing a Kolmogorov-Arnold network (KAN); and
processing circuitry (134) configured to perform the method (200) of any of the preceding claims.

15. A computer program (135) comprising instructions to cause the system identification device (130) of claim 14 to execute the method (200) of any of claims 1 to 13.
